# EUROPÄISCHE PATENTSCHRIFT

(11) **EP 1 818 128 B1**
(45) Veröffentlichungstag und Bekanntmachung des Hinweises auf die Patenterteilung: **23.01.2008**
(21) Anmeldenummer: 06002686.1
(22) Anmeldetag: 10.02.2006
(51) Int. Cl.: B23K 11/087, B29C 65/78

(54) **Verfahren und Vorrichtung zum Pressschweissen von zwei jeweils einen minimalen Stehflansch aufweisenden Bauteilen, insbesondere von zwei Blechen oder Profilen**
Method and device for pressure welding workpieces having a minimum upstanding flange, in particular sheets or profiles
Méthode et dispositif de soudage sous pression de pièces ayant une bride de hauteur minimale, en particulier des tôles ou des profiles

(43) Veröffentlichungstag der Anmeldung: 15.08.2007
(73) Patentinhaber: INPRO Innovationsgesellschaft für fortgeschrittene Produktionssysteme in der Fahrzeugindustrie mbH, 10587 Berlin (DE)
(72) Erfinder: Gigengack, Thomas, 10785 Berlin (DE); Schulenburg, Matthias c/o INPRO I.f.f.P.i.d.F mbH, 10587 Berlin (DE); Kaya, Selahattin, 12043 Berlin (DE)
(74) Vertreter: Hoffmann, Klaus-Dieter

(56) Entgegenhaltungen:
- DE-A1- 1 958 989
- US-A- 2 151 422
- US-A- 4 872 941

## Beschreibung

Die Erfindung betrifft ein Verfahren und eine Vorrichtung zum Preßschweißen von zwei jeweils einen minimalen Stehflansch aufweisenden Bauteilen, insbesondere von zwei Blechen oder Profilen, mittels zweier Schweißelektroden eines Schweißelementes, wobei die beiden Bleche mit ihren Stehflanschen zueinander benachbart zwischen den Schweißelektroden des Schweißelementes positioniert werden und die zum Schweißen erforderliche Wärme von einem durch die Schweißelektroden geführten Stromfluß über den elektrischen Widerstand der Schweißzone der beiden Bleche oder durch Beheizen des Schweißelementes erzeugt wird und die Bleche unter gleichzeitiger Wirkung einer von dem Schweißelement ausgeübten Anpreßkraft miteinander schweißartig verbunden werden.

Beim Widerstandspunkt- und Widerstandsrollnahtschweißen (siehe US-A-2 151 422) ist jeweils ein Flansch erforderlich, auf dem die Schweißverbindung erzeugt wird. Die notwendige Strom- und Kraftkonzentration wird beim Widerstandspunktschweißen an der Schweißstelle durch die Kontaktfläche der Punktschweißelektrode bewirkt. Die Bauteile werden als Überlappungsstoß punktförmig miteinander verbunden. Die Kontaktflächen der Schweißelektroden können flach oder ballig aufsetzend gestaltet werden.

Ziel der vorliegenden Erfindung ist es, Bauteile, insbesondere eine Blechkombination mit minimalen Stehflanschen mittels Preßschweißen so zu verbinden, daß die aufgestellten Flansche zumindest teilweise aufgeschmolzen werden und sich miteinander flanschlos verbinden. Der Erfindung liegt daher die Aufgabe zugrunde, ein Verfahren und eine Vorrichtung der eingangs erwähnten Art zur Verfügung zu stellen, die diesen Anforderungen genügt. Hierbei werden Anwendungsbereich in Betracht gezogen wie Schweißen von Leichtmetallen, Schweißen von Stahl und Schweißen von Mischverbindungen (Stahl-Aluminium), die wegen intermetallischer Phasenbildung normalerweise nicht verschweißbar sind. Auch ist an eine Anwendung beim Schweißen thermoplastischer Kunststoffe gedacht, wobei jedoch keine Widerstandsbeheizung im Werkstoff erfolgt, sondern ein beheiztes Schweißelement Verwendung findet.

Diese Aufgabe wird gemäß der Erfindung verfahrensmäßig dadurch gelöst, daß die beiden zu verschweißenden Bleche und das Schweißelement in Richtung dessen Längsmittellinie derart relativ zueinander bewegt werden, daß die beiden Bleche beabstandet von einander und - gesehen in Richtung von einer Einlaufzone zu einer Auslaufzone des Schweißelementes- an ihren zum Schweißelement benachbarten Enden bis zum Erreichen einer zwischen der Einlaufzone und der Auslaufzone liegenden, eine Schweißzone einschließenden Heizzone des Schweißelementes jeweils in einem sich zur Längsmittellinie des Schweißelementes verjüngenden Winkel α₁ bzw. α₂ ausgerichtet gehalten und bei Erreichen der Heizzone des Schweißelementes aneinander gepreßt werden, wobei die beiden zusammengepreßten Bleche an der Kontaktstelle mit ihren Stehflanschen in der Schweißzone durch Erwärmung zumindest teilweise aufgeschmolzen, anschließend unter fortdauernder Druckbelastung bei gleichzeitiger Kühlung in der Auslaufzone des Schweißelementes flanschlos reißverschlußartig miteinander verschweißt und fortlaufend außerhalb der Auslaufzone des Schweißelementes positioniert werden.

Vorteilhafte Weiterbildungen des erfindungsgemäßen Verfahrens sind in den Patentansprüchen 2 bis 12 beschrieben.

Beim Schweißen von Leichtmetallen, Stahl und Mischverbindungen (Stahl-Aluminium) vollzieht sich die Aufschmelzung der Stehflansche der beiden Bleche in der Schweißzone an ihrer Kontaktstelle durch Erwärmung infolge der Widerstandsbeheizung von innen nach außen. Beim Schweißen von Bauteilen aus thermoplastischen Kunststoffen erfolgt das Aufschmelzen hingegen nicht durch Widerstandsbeheizung im Werkstoff, sondern durch das beheizte Schweißelement.

Vorzugsweise werden die beiden beabstandeten Bleche in ortsfester Stellung gehalten, wobei das Schweißelement wie ein Reißverschlußgleiter von den zu letzterem benachbarten Enden der beiden Bleche aus entlang der Mittellinie zwischen den beiden Blechen in Richtung zu deren entgegengesetzten Enden gleitend geführt wird und die beiden Bleche fortlaufend reißverschlußartig flanschlos miteinander verschweißt und fortgesetzt außerhalb der Auslaufzone des Schweißelementes positioniert werden.

Das Schweißelement kann auch ortsfest gehalten werden, wobei die beiden Bleche nach Einführung ihrer zum Schweißelement benachbarten Enden in dessen Einlaufzone durch die sich verengende Schweißzone des Schweißlementes in dieses eingezogen, in der Schweißzone fortlaufend reißverschlußartig flanschlos miteinander verschweißt und aus der Auslaufzone des Schweißelementes fortlaufend ausgeführt werden. Die beiden Bleche und das Schweißelement können auch zueinander entlang der Längsmittellinie des Schweißelementes bewegt werden. Bevorzugt erfolgt die Führung des Schweißelementes gesteuert mittels eines an dessen Halterung angreifenden Roboters.

Der Grad der Aufschmelzung des Materials der beiden Bleche in der Schweißzone wird durch die Relativgeschwindigkeit von Schweißelement und Blechen, die Höhe des Kraftaufbaus zwischen den beiden Blechen in der Heizzone des Schweißelementes und die Höhe des durch die Schweißelektroden des Schweißelementes in die Schweißzone eingeleiteten Stromflusses gesteuert wird. Die erforderliche Kühlung der Schweißelektroden des Schweißelementes und der Einlauf- Heiz- und Auslaufzone des Schweißelementes können getrennt vorgenommen werden.

Die jeweiligen Ausrichtungswinkel α₁ und α₂ der zur Einlaufzone des Schweißelementes benachbarten Enden der beiden Bleche zur Längsmittellinie des Schweißelementes können bei gleicher Breite der Stehflansche der beiden Bleche gleich und bei unterschiedlicher Breite der Stehflansche der beiden Bleche unterschiedlich gewählt werden.

Bleche aus Mischverbindungen (Stahl-Aluminium) oder Profile aus thermoplastischem Kunststoff werden in der Heizzone des Schweißelementes nur unvollständig aufgeschmolzen und zugleich beim Einziehen in die sich verengende Schweißzone der Heizzone des Schweißelementes zu einer teigigen Materialdurchmischung geknetet, die durch Abkühlung in der Auslaufzone des Schweißelementes in eine flanschlose Schweißverbindung der beiden Bleche oder Profile überführt wird. Beim Widerstandspreßschweißen von Bauteilen aus Stahl-Aluminium werden somit spröde intermetallische Phasen vermieden. Die in der Heizzone des Schweißelementes unvollständig aufgeschmolzenen Bauteile aus Mischverbindungen (Stahl-Aluminium) oder aus thermoplastischem Kunststoff können mittels einer wellenförmigen Ausgestaltung der Heizzone zur der teigigen Materialverbindung zwangsdurchmischt werden. Die Stehflansche von Blechen aus Stahl oder aus Leichtmetallen (Aluminium) werden hingegen in der Schweißzone des Schweißelementes vollständig aufgeschmolzen und durch die Abkühlung in der Auslaufzone des Schweißelementes flanschlos miteinander verschweißt werden.

Die Aufgabe der vorliegenden Erfindung wird weiterhin gelöst durch die gattungsgemäße Vorrichtung zum Preßschweißen von zwei jeweils einen minimalen Stehflansch aufweisenden Bauteilen, insbesondere von zwei Blechen oder Profilen, die durch die Merkmale erfindungsgemäß gekennzeichnet ist, daß
- das Schweißelement und die beiden zu verschweißenden Bleche relativ in Richtung der Längsmittellinie des Schweißelementes zueinander beweglich gehaltert sind,
- das Schweißelement in Form eines Reißverschlußgleiters ausgebildet ist,
- das Gehäuses des Schweißelementes eine Ein- und eine Auslaufzone und eine zwischen diesen angeordnete, die Schweißzone umfassende Heizzone aufweist und von Kühlkanälen eines Kühlsystems durchsetzt ist,
- eine sich in der Einlaufzone, der Heizzone und der Auslaufzone des Gehäuses in Richtung der Längsmittellinie des Schweißelementes fortlaufend erstreckende Führung für die beiden zu verschweißenden Bleche und
- ein Abstandshalter am Gehäuse vorgesehen sind, der sich entlang der Längsmittellinie des Schweißelementes von außerhalb des Gehäuses in die Einlaufzone hinein erstreckt,
eine sich in Richtung der Heizzone keilförmig verjüngender Kontur aufweist und die Führung einlaufzonenseitig in zwei spitzwinklig zueinander verlaufende Einführkanäle für die beiden Bleche derart unterteilt, daß diese unter einem Winkel α₁, und α₂ zur Längsmittellinie Schweißelementes ausgerichtet erst innerhalb der Einlaufzone an einer zur Heizzone benachbarten Kontaktstelle in der Führung aneinanderliegend zu positionieren und in der Führung anschließend innerhalb der Heizzone der von den Schweißelektroden ausgeübten Anpreßkraft auszusetzen sind, dabei in der Schweißzone in einen zumindest teilweise aufgeschmolzenen Zustand zu versetzen und in der nachgeordneten, eine Kühlstation bildenden Auslaufzone unter Kühlung flanschlos miteinander zu verschweißen sind.

Vorteilhafte Weiterbildungen der erfindungsgemäßen Vorrichtung ergeben sich aus den Patentansprüchen 14 bis 21.

Die Erfindung ermöglicht in vorteilhafter Weise praktisch ein flanschloses Verschweißen von Profilen aus thermoplastischen Kunststoffen sowie von Blechen aus Leichtmetall, aus Stahl oder aus Mischverbindungen wie z.B. Stahl-Aluminium, die wegen intermetallischer Phasenbildung normalerweise nicht verschweißbar sind.

Die Erfindung wird nun anhand der Zeichnungen erläutert. In diesen sind:
**Fig. 1** eine Draufsicht auf einen Längsschnitt einer schematisch dargestellten ersten Ausführungsform der Vorrichtung zum Widerstandspreßschweißen von zwei Blechen in Höhe der minimalen Stehflansche der in das Schweißelement eingeführten Bleche, wobei gemeinsamen Kühlkanäle für die Auslaufzone, die Heizzone mit Schweißelektroden und die Einlaufzone des Schweißelementes dargestellt sind,
**Fig. 2** eine Ansicht der linken Stirnseite der ersten Ausführungsform gemäß Fig. 1, wobei die in das Schweißelement eingeführten Bleche im Schnitt gezeigt sind,
**Fig. 3** eine Draufsicht entsprechend der Fig. 1 einer zweiten Ausführungsform der Vorrichtung, bei der die Seitenwände des Gehäuse des Schweißelementes einander entsprechende Öffnungen für die Führung breiterer Bleche aufweisen,
**Fig. 4** eine Ansicht der linken Stirnseite der zweiten Ausführungsform gemäß Fig. 3, wobei die durch die Seitenwände des Gehäuses ragenden Bleche im Schnitt gezeigt sind,
**Fig. 5** eine der Fig. 1 entsprechende Draufsicht einer dritten Ausführungsform der Vorrichtung mit getrennten Kühlkanälen für die Auslaufzone des Schweißelementes einerseits und die Heizzone mit Schweißelektroden und die Einlaufzone des Schweißelementes andererseits, wobei die einander gegenüberliegenden Führungsflächen des Abstandshalters des Schweißelementes unter unterschiedlichen Winkeln α₁ und α₂ zur Längsmittellinie des Schweißelementes geneigt sind,
**Fig. 6** eine der Fig. 1 entsprechende Draufsicht einer vierten Ausführungsform der Vorrichtung, bei der die Heizzone des Schweißelementes wellenförmig gestaltet ist,
**Fig. 7** eine der Fig. 1 entsprechende Draufsicht einer fünften Ausführungsform der Vorrichtung, die hinsichtlich der Kühlkanäle wie die dritte Ausführungsform nach Fig. 5 ausgebildet ist, bei der im Gegensatz zu letzterer die Führungsflächen des Abstandshalters unter gleichem Winkel α₁ und α₂ zur Längsmittellinie des Schweißelementes geneigt sind, und
**Fig. 8** eine Seitenansicht der ersten Ausführungsform der Vorrichtung mit einem an einer Halterung des Schweißelementes angreifenden Roboterarm und einer auf Rollen bewegbaren Stützeinrichtung für die zu verschweißenden Bleche.

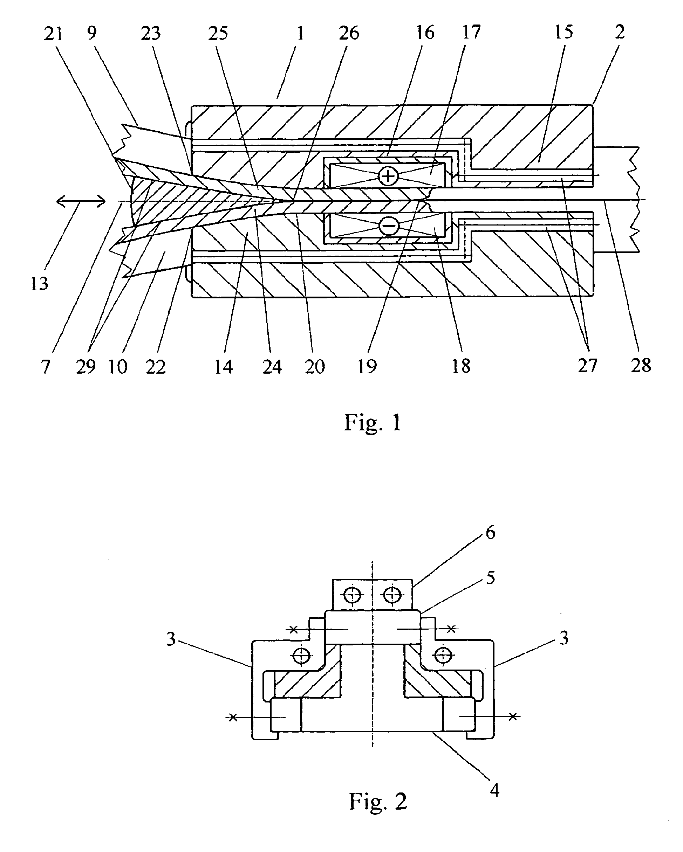

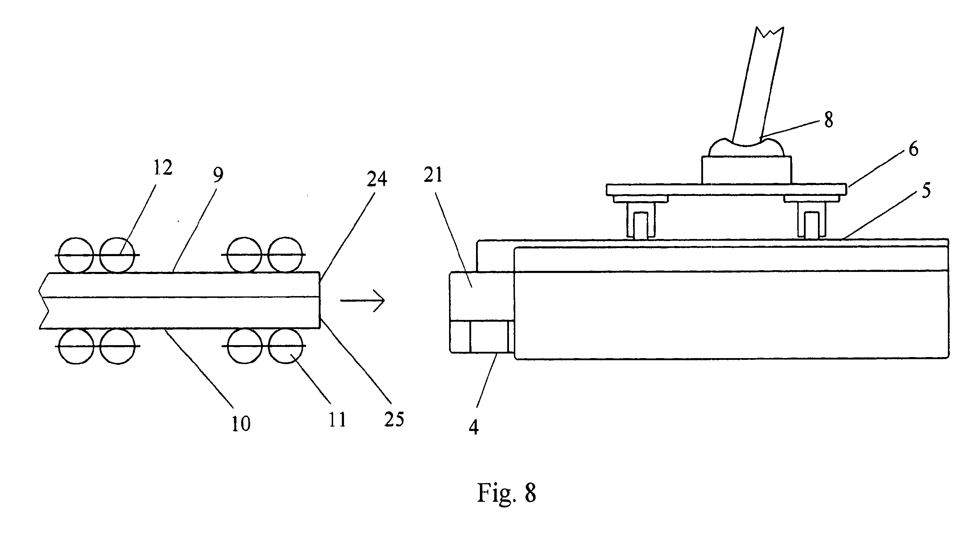

Wie aus den Fig. 1 bis 7 ersichtlich ist, weist die erfindungsgemäße Vorrichtung zum Preßschweißen zweier Bauteile mit jeweils minimalem Stehflansch bei allen fünf dargestellten Ausführungsformen ein Schweißelement 1 auf, das in Form eines Reißverschlußgleiters gestaltet ist. Das Schweißelement 1 besitzt ein Gehäuse 2 mit Seitenwänden 3, einem Boden 4 und einem Deckenteil 5, der mit einer Halterung 6 verbunden ist, wie aus Fig. 2 hervorgeht. Mittels der Halterung 6 kann das Schweißelement 1 ortsfest positioniert werden. Alternativ kann an der Halterung 3 eine das Schweißelement 1 in Richtung dessen Längsmittellinie 7 in Bewegung setzende Einrichtung, z.B. ein Robotorarm 8 angreifen, wie Fig. 8 zeigt. Die beiden zu verschweißenden Bleche 9 und 10 können ortsfest gehalten sein oder, wie ebenfalls aus Fig. 8 ersichtlich ist, mittels einer Antriebsrollen 11 aufweisenden Stützeinrichtung 12 in Richtung der Längsmittellinie 7 des Schweißelementes 1 bewegt werden. Das Schweißelement 1 und die beiden zu verschweißenden Bleche 9 und 10 sind somit relativ in Richtung der Längsmittellinie 7 des Schweißelementes 1 zueinander beweglich gehaltert, wie durch den Doppelpfeil 13 in den Fig. 1, 3 und 5 bis 7 angedeutet ist.

Das Gehäuse 2 des Schweißelementes 1 umfaßt, wie die Fig. 1, 3 und 5 bis 7 zeigen, eine Einlaufzone 14 und eine Auslaufzone 15 und eine zwischen diesen angeordnete Heizzone 16, die eine positive und eine negative Schweißelektrode 17 bzw. 18 und eine zwischen diesen befindliche Schweißzone 19 beinhaltet. In der Einlaufzone 14, der Heizzone 16 und der Auslaufzone 15 des Gehäuses 2 des Schweißelementes 1 erstreckt sich fortlaufend in Richtung der Längsmittellinie 7 des Schweißelementes 1 eine Führung 20 für die beiden zu verschweißenden Bleche 9 und 10.

Einlaufzonenseitig ist ein Abstandshalter 21 am Gehäuse 2 vorgesehen, der sich entlang der Längsmittellinie 7 des Schweißelementes 1 von außerhalb des Gehäuses 2 in die Einlaufzone 14 hinein erstreckt, eine sich in Richtung der Heizzone 16 - gesehen im Längsschnitt der Fig. 1 - keilförmig verjüngende Kontur aufweist und die Führung 20 einlaufzonenseitig in zwei spitzwinklig zueinander verlaufende Einführkanäle 22 und 23 für je ein Blech 9 bzw. 10 derart unterteilt, daß die beiden Bleche 9 und 10 unter einem Winkel α₁ bzw. α₂ zur Längsmittellinie 7 des Schweißelementes 1 ausgerichtet mit ihren Stehflanschen 24 und 25 erst innerhalb der Einlaufzone 14 an einer zur Heizzone 16 benachbarten Kontaktstelle 26 in der Führung 20 aneinanderliegend positioniert sind.

In der Heizzone 16 des Schweißelementes 1 werden die Bleche 9 und 10 mit ihren Stehflanschen 24 und 25 durch von den Schweißelektroden 17 und 18 ausgeübten Apreßdruck zusammengepreßt und im Bereich ihrer Stehflansche 24 und 25 in der Schweißzone 19 durch von innen nach außen erfolgende Erwärmung beim Widerstandsheizprozeß oder durch das beheizte Schweißelement 1 zumindest teilweise aufgeschmolzen und anschließend unter fortlaufender Druckbelastung bei gleichzeitiger Kühlung mittels eines durch Kühlkanäle 27 geführten Kühlmittels zur Auslaufzone 15 hin flanschlos reißverschlußartig miteinander verschweißt, wie in den Fig. 1, 3 und 5 bis 7 durch die Schweißnaht 28 angedeutet ist. Die miteinander flanschlos verschweißten Bleche 9 und 10 werden dann fortlaufend außerhalb der Auslaufzone 15 des Schweißelementes 1 positioniert.

Bei der in Fig. 1 gezeigten ersten Ausführungsform der Vorrichtung weist das Gehäuse 2 des Schweißelementes 1 ein gemeinsames Kühlsystem für die Auslaufzone 15, die Heizzone 16 mit den Schweißelektroden 17 und 18 und für die Einlaufzone 14 auf, wie durch die sich durch das gesamte Gehäuse 2 erstreckenden Kühlkanäle 27 in Fig. 1 und Fig. 2 ersichtlich ist. Die seitlichen Führungsflächen 29 des Abstandshalters 21 mit sich keilförmig verjüngende Kontur sind jeweils unter gleichen Winkeln α₁ und α₂ zur Längsmittellinie 7 des Schweißelementes 2 ausgerichtet, so daß die in den spitzwinklig zueinander ausgerichteten Einführkanälen 22 und 23 geführten Bleche 9 und 10 unter dem gleichen Winkeln α₁ und α₂ zur Längsmittellinie 7 des Schweißelementes 2 ausgerichtet innerhalb der Einlaufzone 14 an der zur Heizzone 16 benachbarten Kontaktstelle 26 in der Führung 20 mit ihren Stehflanschen 24 und 25 aneinander zur Anlage kommen. Da die Seitenwände 3 des Gehäuse 2 des in Form eines Reißverschlußgleiters gestalteten Schweißelementes 2 die Einfuhrkanäle 22 und 23 seitlich begrenzen, sind mit dieser Ausführungsform nur Bauteile verschweißbar, deren Breitenabmessung kleiner als die Breitenabmessung jedes der Einführkanäle 22 und 23 des Gehäuses 2 des Reißverschlußgleiters ist, wie Fig. 2 deutlich macht.

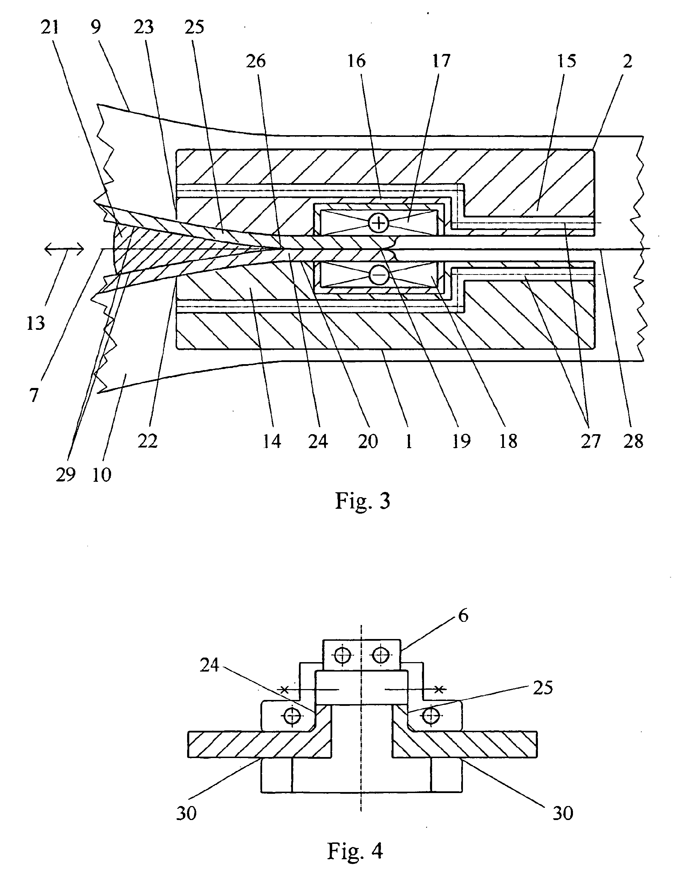

Die aus den Fig. 3 und 4 hervorgehende zweite Ausführungsform der Vorrichtung ist im wesentlich wie die erste Ausführungsform gestaltet, jedoch mit dem Unterschied, daß die beiden Seitenwände 3 des Gehäuses 2 des Reißverschlußgleiters einander entsprechende, mit den Einführkanälen 22 und 23 und der Führung 20 fluchtende Öffnungen 30 derart aufweisen, daß Bauteile, deren Breite größer als die jeweilige Breite der Einfuhrkanäle 22 und 23 des Gehäuses 2 des Schweißelementes 1 sind, verschweißt werden können.

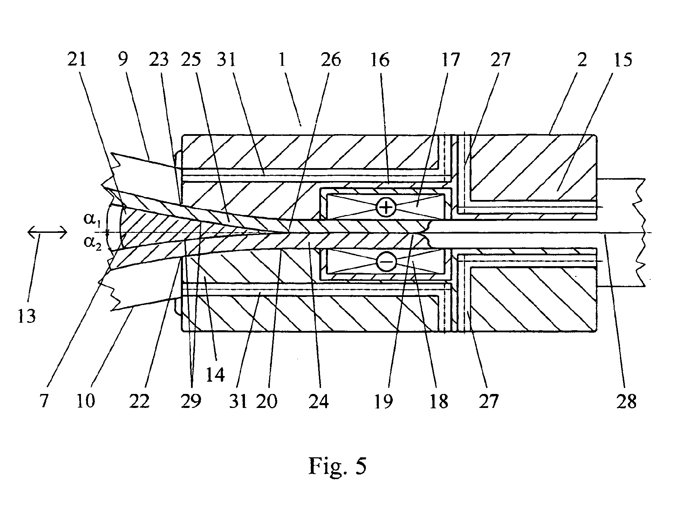

Bei der in Fig. 5 gezeigten dritten Ausführungsform der Vorrichtung, die im wesentlichen mit der ersten Ausführungsform übereinstimmt, sind im Unterschied zur der ersten Ausführungsform getrennte Kühlkanäle 27 und 31 für die Auslaufzone 15 des Schweißelementes 2 einerseits und für die Heizzone 16 mit den Schweißelektroden 17 und 18 und die Einlaufzone 14 des Schweißelementes 1 andererseits vorgesehen Weiterhin sind bei dieser Ausführungsform die einander gegenüberliegenden seitlichen Führungsflächen 29 des Abstandshalters 21 unter unterschiedlichen Winkeln α₁ und α₂ zur Längsmittellinie 7 des Schweißelementes 1 geneigt, so daß zu verschweißende Bleche 9 und 10 mit entsprechend unterschiedlich starken Stehflanschen 24 und 25 in den Einführkanälen 22 und 23 des Schweißelementes 1 aufnehmbar sind.

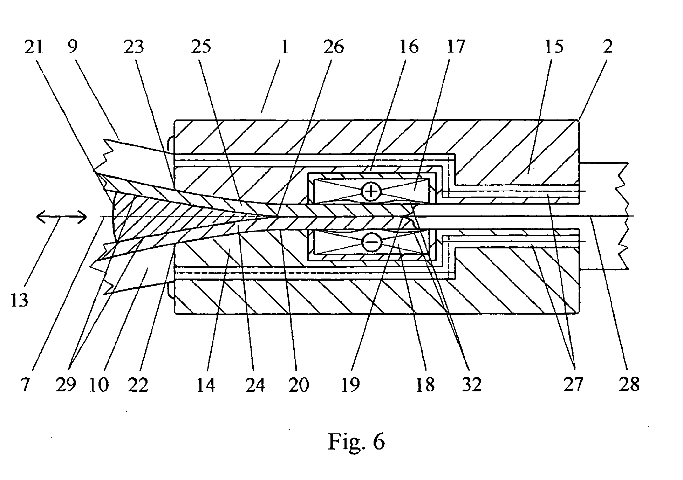

Die aus Fig. 6 hervorgehende vierte Ausführungsform der Vorrichtung entspricht im Prinzip der ersten Ausführungsform, jedoch ist hier die Heizzone 16 des Schweißelementes 1 in Wellenform 32 gestaltet. Hierdurch werden die in der Heizzone 16 des Schweißelementes 1 unvollständig aufgeschmolzenen Bleche 9 und 10 aus Mischverbindungen wie Stahl-Aluminium oder Bauteile aus thermoplastischem Kunststoff zu einer teigigen Materialverbindung zwangsdurchmischt.

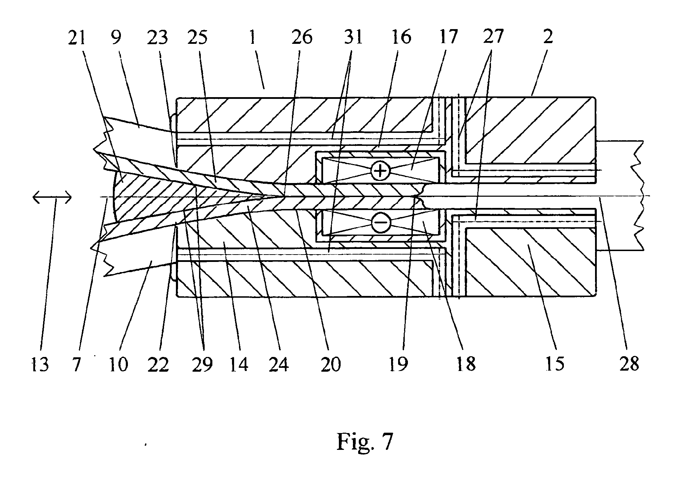

Fig. 7 zeigt weiterhin eine fünfte Ausführungsform der Vorrichtung, die im wesentlichen wie die dritte Ausführungsform ausgebildet ist, bei der im Gegensatz zu letzterer jedoch die seitlichen Führungsflächen 29 des Abstandshalters 21 des Schweißelementes 1 unter gleichen Winkeln α₁ und α₂ zur Längsmittellie 7 des Schweißelementes 1 geneigt sind.

In Fig. 8 ist in Seitenansicht die erste Ausführungsform der Vorrichtung in Zuordnung zu der Stützeinrichtung 12 der beiden zu verschweißenden Bleche 9 und 10 gezeigt, wobei die Stützeinrichtung 12 in Richtung der Längsmittellinie 7 des als Reißverschlußgleiters gestalteten Schweißelementes 1 außerhalb dessen Einlaufzone 14 angeordnet ist. Mittels des an der Halterung 6, die mit dem Deckenteil 5 des Gehäuses 2 verbunden ist, angreifenden Roboterarms 8 kann der Reißverschlußgleiter nach Einführung der entsprechenden Enden der beiden ortsfest auf der Stützeinrichtung 12 gehaltenen Bleche 9 und 10 in die Einführkanäle 22 und 23 des Gehäuses 2 entgegen der Einführrichtung der beiden Bleche 9 und 10 fortlaufend bewegt werden, wobei letztere reißverschlußartig flanschlos fortlaufend verschweißt werden.

Wie aus Fig. 8 weiterhin hervorgeht, kann die Stützeinrichtung 12 für die beiden Bleche 9 und 10 über die Antriebsrollen 11 in Bewegung versetzt werden, so daß die Bleche 9 und 10 in Richtung der Längsmittellinie 7 des Schweißelementes 1 zu diesem bewegt werden können, wobei das Schweißelement 1 ortsfest angeordnet oder, wie zuvor beschrieben, vom Roboterarm 8 bewegt sein kann.

### Liste der Bezugszeichen:

- 1: Schweißelement
- 2: Gehäuse
- 3: Seitenwände
- 4: Boden
- 5: Deckenteil
- 6: Halterung
- 7: Längsmittellinie des Schweißelementes
- 8: Roboterarm
- 9,10: Bauteile; Bleche
- 11: Antriebsrollen
- 12: Stützeinrichtung
- 13: Doppelpfeil
- 14: Einlaufzone
- 15: Auslaufzone
- 16: Heizzone
- 17: positive Schweißelektrode
- 18: negative Schweißelektrode
- 19: Schweißzone
- 20: Führung
- 21: Abstandshalter
- 22,23: Einführkanäle
- 24,25: Stehflansche
- 26: Kontaktstelle
- 27: Kühlkanäle
- 28: Schweißnaht
- 29: Führungsflächen
- 30: Öffungen in den Seitenwänden
- 31: Kühlkanäle
- 32: Wellenform der Heizzone

## Patentansprüche

1. Verfahren zum Preßschweißen von zwei jeweils einen minimalen Stehflansch aufweisenden Bauteilen, insbesondere von zwei Blechen oder Profilen, mittels zweier Schweißelektroden eines Schweißelementes, wobei die beiden Bleche mit ihren Stehflanschen zueinander benachbart zwischen den Schweißelektroden des Schweißelementes positioniert werden und die zum Schweißen erforderliche Wärme von einem durch die Schweißelektroden geführten Stromfluß über den elektrischen Widerstand der Schweißzone der beiden Bleche oder bei Profilen aus thermoplastischen Kunststoff durch Beheizen des Schweißelementes erzeugt wird und die Bleche oder Profile unter gleichzeitiger Wirkung einer von dem Schweißelement ausgeübten Anpreßkraft miteinander schweißartig verbunden werden,
**dadurch gekennzeichnet, daß**
- die beiden zu verschweißenden Bleche und das Schweißelement in Richtung dessen Längsmittellinie derart relativ zueinander bewegt werden, daß die beiden Bleche beabstandet von einander und - gesehen in Richtung von einer Einlaufzone zu einer Auslaufzone des Schweißelementes- an ihren zum Schweißelement benachbarten Enden bis zum Erreichen einer zwischen der Einlaufzone und der Auslaufzone liegenden, eine Schweißzone einschließenden Heizzone des Schweißelementes jeweils in einem sich zur Längsmittelllinie des Schweißelementes verjüngenden Winkeln (α₁ bzw. α₂) ausgerichtet gehalten und bei Erreichen der Heizzone des Schweißelementes mit ihren Stehflanschen aneinander gepreßt werden, wobei die beiden zusammengepreßten Bleche an der Kontaktstelle im Bereich ihrer Stehflansche in der Schweißzone durch Erwärmung zumindest teilweise aufgeschmolzen, anschließend unter fortdauernder Druckbelastung bei gleichzeitiger Kühlung in der Auslaufzone des Schweißelemente flanschlos reißverschlußartig miteinander verschweißt und fortlaufend außerhalb der Auslaufzone des Schweißelementes positioniert werden.

2. Verfahren nach Anspruch 1, **dadurch gekennzeichnet, daß** die beiden beabstandeten Bleche in ortsfester Stellung gehalten werden und das Schweißelement wie ein Reißverschlußgleiter von den zu letzterem benachbarten Enden der beiden Bleche aus längs der Mittellinie zwischen den beiden Blechen in Richtung zu deren entgegengesetzten Enden gleitend geführt wird, wobei die beiden Bleche fortlaufend reißverschlußartig flanschlos miteinander verschweißt und außerhalb der Auslaufzone des Schweißelementes fortgesetzt positioniert werden.

3. Verfahren nach Anspruch 1, **dadurch gekennzeichnet, daß** das Schweißelement ortsfest gehalten wird und die beiden Bleche nach Einführung ihrer zum Schweißelement benachbarten Enden in dessen Einlaufzone durch die sich verengende Heizzone des Schweißelementes in dieses eingezogen, in der Schweißzone aufgeschmolzen, in der Auslaufzone unter Abkühlung fortlaufend reißverschlußartig flanschlos miteinander verschweißt und aus der Auslaufzone des Schweißelementes fortlaufend ausgeführt werden.

4. Verfahren nach Anspruch 1, **dadurch gekennzeichnet, daß** die beiden Bleche und das Schweißelement entgegengesetzt zueinander in Richtung der Längsmittellinie des Schweißelementes bewegt werden.

5. Verfahren nach einem der Ansprüche 1, 3 und 4, **dadurch gekennzeichnet, daß** die Führung des Schweißelementes robotergesteuert erfolgt.

6. Verfahren nach einem der Ansprüche 1 bis 5, **dadurch gekennzeichnet, daß** der Grad der Aufschmelzung des Materials der beiden Bleche in der Schweißzone durch die Relativgeschwindigkeit von Schweißelement und Blechen, die Höhe des Kraftaufbaus zwischen den beiden Blechen in der Heizzone des Schweißelementes und die Höhe des durch die Schweißelektroden des Schweißelementes in die Schweißzone eingeleiteten Stromflusses gesteuert wird.

7. Verfahren nach einem der Ansprüche 1 bis 6, **dadurch gekennzeichnet, daß** die Kühlung der Schweißelektroden des Schweißelementes und der Einlauf- Heiz- und Auslaufzone des Schweißelementes getrennt vorgenommen werden.

8. Verfahren nach einem der Ansprüche 1 bis 7, **dadurch gekennzeichnet, daß** die jeweiligen Ausrichtwinkel α₁ und α₂ der zur Einlaufzone des Schweißelementes benachbarten Enden der beiden Bleche in Bezug auf die Längsmittellinie des Schweißelementes bei gleicher Breite der Stehflansche der beiden Bleche gleich gewählt werden.

9. Verfahren nach einem der Ansprüche 1 bis 7, **dadurch gekennzeichnet, daß** die jeweiligen Ausrichtwinkel α₁ und α₂ der zur Einlaufzone des Schweißelementes benachbarten Enden der beiden Bleche in Bezug auf die Längsmittellinie des Schweißelementes bei unterschiedlicher Breite der Stehflansche der beiden Bleche unterschiedlich gewählt werden.

10. Verfahren nach einem der Ansprüche 1 bis 9, **dadurch gekennzeichnet, daß** Bleche aus Mischverbindungen (Stahl-Aluminium) oder Profile aus thermoplasstischen Kunststoff in der Heizzone des Schweißelementes nur unvollständig aufgeschmolzen und zugleich beim Einziehen in die sich verengende Schweißzone der Heizzone des Schweißelementes zu einer teigigen Materialdurchmischung geknetet werden, die durch Abkühlung in der Auslaufzone des Schweißelementes in eine flanschlose Schweißverbindung der beiden Bleche überführt wird.

11. Verfahren nach Anspruch 10, **dadurch gekennzeichnet, daß** die in der Heizzone des Schweißelementes unvollständig aufgeschmolzenen Bleche aus Mischverbindungen (Stahl-Aluminium) oder die Profile aus thermoplastischem Kunststoff mittels einer wellenförmigen Ausgestaltung der Heizzone zur der teigigen Materialverbindung zwangsdurchmischt werden.

12. Verfahren nach einem der Ansprüche 1 bis 9, **dadurch gekennzeichnet, daß** die Stehflansche von Blechen aus Stahl oder aus Leichtmetallen (Aluminium) in der Schweißzone des Schweißelementes vollständig aufgeschmolzen und durch die Abkühlung in der Auslaufzone des Schweißelementes flanschlos miteinander verschweißt werden.

13. Vorrichtung zum Preßschweißen von zwei jeweils einen minimalen Stehflansch (24; 25) aufweisenden Bauteile (9; 10), insbesondere von zwei zwei Blechen oder Profilen, mit einem Schweißelement (1) mit einem eine Halterung (6) aufweisenden Gehäuse (2), in dem zwei Schweißelektroden (17; 18) vorgesehen sind, zwischen denen die Bleche (24; 25) zum Verschweißen zu positionieren sind, wobei die zum Verschweißen erforderliche Wärme von einem durch die Schweißelektroden (17; 18) zu führenden Stromfluß über den elektrischen Widerstand einer Schweißzone (19) der beiden Bleche (9; 10) oder durch eine Beheizung des Schweißelementes (1) zu erzeugen ist und die beiden Bleche oder Profile (9; 10) unter gleichzeitiger Wirkung einer von den Schweißelektroden (17; 18) des Schweißelementes (1) auf die Bleche (9; 10) auszuübenden Anpreßkraft miteinander schweißartig zu verbinden sind, wobei, das Schweißelement (1) und die beiden zu verschweißenden Bleche (9; 10) relativ in Richtung der Längsmittellinie (7) des Schweißelementes (1) zueinander beweglich gehaltert sind, **gekennzeichnet durch** die Merkmale, daß
- das Schweißelement (1) in Form eines Reißverschlußgleiters ausgebildet ist,
- das Gehäuse (2) des Schweißelementes (1) eine Einlaufzone (14) und eine Auslaufzone (15) und eine zwischen diesen angeordnete, die Schweißzone (19) umfassende Heizzone (16) aufweist und von Kühlkanälen (27; 31) eines Kühlsystems durchsetzt ist,
- eine sich in der Einlaufzone (14), der Heizzone (16) und der Auslaufzone (15) des Gehäuses (2) in Richtung der Längsmittellinie (7) des Schweißelementes (1) fortlaufend erstreckenden Führung (20) für die beiden zu verschweißenden Bleche (9; 10) und
- ein Abstandshalter (21) am Gehäuse (2) vorgesehen sind, der sich entlang der Längsmittellinie (7) des Schweißelementes (1) von außerhalb des Gehäuses (2) in die Einlaufzone (14) hinein erstreckt, eine sich in Richtung der Heizzone (16) keilförmig verjüngender Kontur aufweist und die Führung (20) einlaufzonenseitig in zwei spitzwinklig zueinander verlaufende Einführkanäle (22 und 23) für die beiden Bleche (9 bzw. 10) derart unterteilt, daß diese unter einem Winkel (α₁ bzw. α₂₎ zur Längsmittellinie (7) des Schweißelementes (1) ausgerichtet erst innerhalb der Einlaufzone (14) an einer zur Heizzone (16) benachbarten Kontaktstelle (26) in der Führung (20) aneinanderliegend zu positionieren und
in der Führung (20) anschließend innerhalb der Heizzone (16) der von den Schweißelektroden (17; 18) ausgeübten Anpreßkraft auszusetzen sind, dabei in der Schweißzone (19) in einen zumindest teilweise aufgeschmolzenen Zustand zu versetzen und in der nachgeordneten, eine Kühlstation bildenden Auslaufzone (15) unter Kühlung flanschlos miteinander zu verschweißen sind.

14. Vorrichtung nach Anspruch 13, **dadurch gekennzeichnet, daß** die zu verschweißenden Bleche (9; 10) von einer Stützeinrichtung (12) ortsfest gehalten sind und das Schweißelement (1) in Form des Reißverschlußgleiters von einem Robotorarm (8) in Richtung der Längsmittellinie (7) des Schweißelementes (1) zu den einlaufzonenseitigen Enden der Bleche (9; 10) zu bewegen ist.

15. Vorrichtung nach Anspruch 13, **dadurch gekennzeichnet, daß** die Stützeinrichtung (12) der zu verschweißenden Bleche (9; 10) mittels Antriebsrollen (11) anzutreiben ist derart, daß die Bleche (9; 10) in Richtung der Längsmittellinie (7) des Schweißelementes (1) zu diesem hin zu bewegen sind.

16. Vorrichtung nach Anspruch 15, **dadurch gekennzeichnet, daß** das Schweißelement (1) mittels der Halterung (6) ortsfest gehalten ist.

17. Vorrichtung nach Anspruch 15, **dadurch gekennzeichnet, daß** das Schweißelement (1) in Richtung seiner Längsmittellinie (7) den angetriebenen Blechen (9; 10) entgegen zu bewegen ist.

18. Vorrichtung nach Anspruch 13 bis 17, **dadurch gekennzeichnet, daß** die Heizzone (16) wellenförmig ausgebildet ist.

19. Vorrichtung nach Anspruch 13 bis 18, **dadurch gekennzeichnet, daß** getrennte Kühlsysteme (27; 31) für die Schweißelektroden (17; 18) einerseits und für die Einlauf-, Heiz- und Auslaufzone (14; 16; 15) des Schweißelementes (1) andererseits vorgesehen sind.

20. Vorrichtung nach Anspruch 13 bis 19, **dadurch gekennzeichnet, daß** die jeweiligen Ausrichtwinkel α₁ und α₂ der seitlichen Führungsflächen (29) des Abstandshalters (21) zur Längsmittellinie (1) des Schweißelementes (1) bei gleicher Breite der Stehflansche (24; 25) gleich sind.

21. Vorrichtung nach Anspruch 13 bis 19, **dadurch gekennzeichnet, daß** die jeweiligen Ausrichtwinkel α₁ und α₂ der seitlichen Führungsflächen (29) des Abstandshalters (21) zur Längsmittellinie (1) des Schweißelementes (1) bei unterschiedlicher Breite der Stehflansche (24; 25) unterschiedlich sind.

## Claims

1. A method for pressure welding of two components, each having a minimum upstanding flange, in particular two sheets or profiles, by means of two welding electrodes of a welding element, wherein the two sheets are positioned with their upstanding flanges adjacent to one another between the welding electrodes of the welding element and the heat required for welding is generated by a current flow guided through the welding electrodes via the electrical resistance of the welding zone of the two sheets or in the case of profiles made of thermoplastic by heating the welding element, and the sheets or profiles are joined together in the manner of a weld under the simultaneous action of a pressing force exerted by the welding element, **characterised in that**
- the two sheets to be welded and the welding element are moved relative to one another in the direction of its longitudinal central line in such a manner that the two sheets are held at a distance from one another and, when viewed in the direction from an inlet zone to an outlet zone of the welding element, at their ends adjacent to the welding element, are each aligned at an angle α₁ or α₂ tapering towards the longitudinal central line of the welding element until they reach a heating zone of the welding element located between the inlet zone and the outlet zone and enclosing a welding zone and, when reaching the heating zone of the welding element, are pressed with their upstanding flanges against one another, wherein in the contact position in the area of their upstanding flanges the two sheets which are pressed together, are at least partly melted by heating in the welding zone, then welded together in a flangeless, zip-fastener manner whilst continuously applying pressure and simultaneously cooling in the outlet zone of the welding element and are continuously positioned outside the outlet zone of the welding element.

2. The method according to claim 1, **characterised in that** the two spaced-apart sheets are held in a fixed position and the welding element is slidingly guided like a zip slider from the ends of the two sheets adjacent to said slider along the central line between the two sheets in the direction of their opposite ends, wherein the two sheets are continuously welded together in a zip-fastener, flangeless manner and are continuously positioned outside the outlet zone of the welding element.

3. The method according to claim 1, **characterised in that** the welding element is held in a fixed position and after inserting their ends adjacent to the welding element into its inlet zone, the two sheets are pulled through the narrowing heating zone of the welding element into said element, melting in the welding zone, continuously welded together in a zip-fastener, flangeless manner in the outlet zone whilst cooling and continuously guided outside the outlet zone of the welding element.

4. The method according to claim 1, **characterised in that** the two sheets and the welding element are moved oppositely to one another in the direction of the longitudinal central line of the welding element.

5. The method according to one of claims 1, 3 and 4, **characterised in that** the guidance of the welding element is robot-controlled.

6. The method according to claim 1 to 5, **characterised in that** the degree of melting of the material of the two sheets in the welding zone is controlled by the relative speed of the welding element and sheets, the magnitude of the force built up between the two sheets in the heating zone of the welding element and the magnitude of the current flow introduced into the welding zone by the welding electrodes of the welding element.

7. The method according to claim 1 to 6, **characterised in that** the cooling of the welding electrodes of the welding element and of the inlet, heating and outlet zone of the welding element is carried out separately.

8. The method according to claim 1 to 7, **characterised in that** the respective alignment angles α₁ and α₂ of the ends of the two sheets adjacent to the inlet zone of the welding element relative to the longitudinal central line of the welding element are selected to be the same when the width of the upstanding flanges of the two sheets is the same.

9. The method according to claim 1 to 7, **characterised in that** the respective alignment angles α₁ and α₂ of the ends of the two sheets adjacent to the inlet zone of the welding element relative to the longitudinal central line of the welding element are selected to be the different when the width of the upstanding flanges of the two sheets is different.

10. The method according to claim 1 to 9, **characterised in that** sheets of mixed compounds (steel-aluminium) or profiles of thermoplastic material are only incompletely melted in the heating zone of the welding element and at the same time, during drawing into the narrowing welding zone of the heating zone of the welding element, are kneaded to form a doughy material mixture which is converted into a flangeless welded join of the two sheets by cooling in the outlet zone of the welding element.

11. The method according to claim 10, **characterised in that** the sheets of mixed compounds (steel-aluminium) or profiles of thermoplastic material incompletely melted in the heating zone of the welding element are forcibly mixed to form a doughy material compound by means of a corrugated configuration of the heating zone.

12. The method according to claim 1 to 9, **characterised in that** the upstanding flanges of sheets of steel or of light metals (aluminium) are completely melted in the welding zone of the welding element and welded together in a flangeless manner by cooling in the outlet zone of the welding element.

13. A device for pressure welding of two components (9; 10), each having a minimum upstanding flange (24; 25), in particular two sheets or profiles, comprising a welding element (1) with a housing (2) having a holder (6), in which two welding electrodes (17; 18) are provided, between which the sheets (24; 25) are to be positioned for welding, wherein the heat required for welding is generated by a current flow guided through the welding electrodes (17; 18) via the electrical resistance of a welding zone (19) of the two sheets (9; 10) or by heating the welding element (1), and the two sheets or profiles (9; 10) are joined together in the manner of a weld under the simultaneous action of a pressing force exerted by the welding electrodes (17; 18) of the welding element (1) on the sheets (9; 10), **characterised in that**
- the welding element (1) and the two sheets to be welded (9; 10) are held so that they can be moved relative to one another in the direction of the longitudinal central line (7) of the welding element (1),
- the welding element (1) is configured in the form of a zip slider,
- the housing (2) of the welding element (1) comprises an inlet zone (14) and an outlet zone (15) and a heating zone (16) comprising the welding zone (19) located therebetween and is penetrated by cooling channels (27; 31) of a cooling system,
- a guide (20) for the two sheets (9; 10) to be welded extending continuously in the inlet zone (14), the heating zone (16) and the outlet zone (15) of the housing (2) in the direction of the longitudinal central line (7) of the welding element (1) and
- a spacer (21) are provided on the housing (2), which extends along the longitudinal central line (7) of the welding element (1) from outside the housing (2) into the inlet zone (14), which has a wedge-shaped tapering contour in the direction of the heating element (16) and divides the guide (20) on the side of the inlet zone into two inlet channels (22 and 23) for the two sheets (9 or 10) running at an acute angle to one another in such a manner that these are positioned adjacent to one another at a contact point (26) adjacent to the heating zone (16) in the guide (20) only aligned at an angle α₁ or α₂ to the longitudinal central line (7) of the welding element (1) inside the inlet zone (20) and are then exposed to the pressing force exerted by the welding electrodes (17; 18) inside the heating zone (16) in the guide (20), being immediately converted into a partly molten state in the welding zone (19) and then welded to one another in a flangeless manner whilst cooling in the downstream outlet zone (15) forming a cooling station.

14. The device according to claim 13, **characterised in that** the sheets (9; 10) to be welded are held in a fixed position by a support device (12) and the welding element (1) is moved in the form of a zip slider by a robot arm (8) in the direction of the longitudinal central line (7) of the welding element (1) towards the ends of the sheets (9; 10) on the side of the inlet zone.

15. The device according to claim 13, **characterised in that** the support device (12) of the sheets (9; 10) to be welded can be driven by means of drive rollers (11) in such a manner that the sheets (9; 10) can be moved in the direction of the longitudinal central line (7) of the welding element (1).

16. The device according to claim 15, **characterised in that** the welding element (1) is held in a fixed position by means of the holder (6).

17. The device according to claim 15, **characterised in that** the welding element (1) can be moved in the direction of its central longitudinal line (7) in the opposite direction to the driven sheets (9; 10).

18. The device according to claim 13 to 17, **characterised in that** heating zone (16) is configured as corrugated.

19. The device according to claim 13 to 18, **characterised in that** separate cooling systems (27; 31) are provided for the welding electrodes (17; 18) on the one hand and for the inlet, heating and outlet zone (14; 16; 15) of the welding element (1) on the other hand.

20. The device according to claim 13 to 19, **characterised in that** the respective alignment angles α₁ and α₂ of the lateral guide surfaces (29) of the spacer (21) towards the longitudinal central line (7) of the welding element (1) are the same when the width of the upstanding flanges (24; 25) is the same.

21. The device according to claim 13 to 19, **characterised in that** the respective alignment angles α₁ and α₂ of the lateral guide surfaces (29) of the spacer (21) towards the longitudinal central line (7) of the welding element (1) are different when the width of the upstanding flanges (24; 25) is different.

## Revendications

1. Procédé pour le soudage par pression de deux éléments de construction comportant chacun un rebord vertical minimal, en particulier de deux tôles ou profils, au moyen de deux électrodes de soudage d'un élément de soudage, les deux tôles étant positionnées avec leurs bords verticaux adjacents l'un vers l'autre, entre les électrodes de soudage de l'élément de soudage, et la chaleur nécessaire au soudage étant produite par un courant électrique conduit par les électrodes de soudage, par le biais de la résistance électrique de la zone de soudage des deux tôles, ou étant produite par le chauffage de l'élément de soudage lorsqu'il s'agit de profils en matière thermoplastique, et les tôles ou profils étant reliés ensemble à la façon d'un soudage, sous l'effet simultané d'une force de pression exercée par l'élément de soudage,
**caractérisé en ce que**
- les deux tôles à souder et l'élément de soudage sont déplacés l'un vers l'autre dans le sens de l'axe médian longitudinal de celui-ci, de telle manière que les deux tôles sont espacées l'une de l'autre et maintenues - dans le sens allant d'une zone d'entrée vers une zone de sortie de l'élément de soudage - de façon à être orientées selon un angle α1 ou α2 qui se rétrécit vers l'axe médian longitudinal de l'élément de soudage, à leurs extrémités adjacentes à l'élément de soudage, jusqu'à ce qu'elles atteignent une zone de chauffage de l'élément de soudage, cette zone de chauffage comprenant une zone de soudage et étant située entre la zone d'entrée et la zone de sortie, et de telle manière qu'elles sont pressées l'une contre l'autre par leurs rebords verticaux lorsqu'elles atteignent la zone de chauffage de l'élément de soudage, les deux tôles pressées ensemble étant au moins partiellement fondues par chauffage dans la zone de soudage, au point de contact dans la région de leurs rebords verticaux, puis étant soudées ensemble sous pression continue et simultanément refroidies dans la zone de sortie de l'élément de soudage, sans rebords, à la manière d'une fermeture éclair, et étant ensuite positionnées à l'extérieur de la zone de sortie de l'élément de soudage.

2. Procédé selon la revendication 1, **caractérisé en ce que** les deux tôles espacées sont maintenues en position fixe et l'élément de soudage est guidé comme un coulisseau de fermeture éclair, depuis les extrémités de tôles adjacentes à l'élément de soudage, dans la longueur de l'axe médian entre les deux tôles, jusqu'aux extrémités opposées, les deux tôles étant soudées ensemble en continu, sans rebords, à la façon d'une fermeture éclair, et étant ensuite positionnées à l'extérieur de la zone de sortie de l'élément de soudage.

3. Procédé selon la revendication 1, **caractérisé en ce que** l'élément de soudage est maintenu en position fixe et les deux tôles sont glissées dans l'élément de soudage, vers la zone de chauffage rétrécie de l'élément de soudage, après insertion de leurs extrémités adjacentes à l'élément de soudage dans la zone d'entrée de ce dernier, les deux tôles étant fondues dans la zone de soudage, soudées ensemble en continu dans la zone de sortie, à la façon d'une fermeture éclair, sans rebords, tout en étant refroidies, puis retirées en continu de la zone de sortie de l'élément de soudage.

4. Procédé selon la revendication 1, **caractérisé en ce que** les deux tôles et l'élément de soudage sont déplacés dans des directions opposées l'une par rapport à l'autre, dans le sens de l'axe médian longitudinal.

5. Procédé selon l'une des revendications 1, 3, 4, **caractérisé en ce que** le guidage de l'élément de soudage est commandé par un robot.

6. Procédé selon les revendications 1 à 5, **caractérisé en ce que** le degré de fusion du matériau des deux tôles dans la zone de soudage est déterminé par la vitesse relative de l'élément de soudage par rapport aux deux tôles, par l'intensité de la force établie entre les deux tôles dans la zone de chauffage de l'élément de soudage et par l'intensité du courant électrique induit par les électrodes de soudage de l'élément de soudage dans la zone de soudage.

7. Procédé selon les revendications 1 à 6, **caractérisé en ce que** le refroidissement des électrodes de soudage de l'élément de soudage et celui des zones d'entrée, de chauffage et de sortie sont effectués séparément.

8. Procédé selon les revendications 1 à 7, **caractérisé en ce que** les angles d'orientation α1 et α2 des extrémités de tôles adjacentes à la zone d'entrée de l'élément de soudage sont choisis de façon à être identiques par rapport à l'axe médian longitudinal de l'élément de soudage, avec une même largeur des rebords verticaux des deux tôles.

9. Procédé selon les revendications 1 à 7, **caractérisé en ce que** les angles d'orientation α1 et α2 des extrémités de tôles adjacentes à la zone d'entrée de l'élément de soudage sont choisis de façon à être différents par rapport à l'axe médian longitudinal de l'élément de soudage, avec une largeur différente des rebords verticaux des deux tôles.

10. Procédé selon les revendications 1 à 9, **caractérisé en ce que** des tôles en alliages (acier - aluminium) ou des profils en matière thermoplastique sont seulement partiellement fondus dans la zone de chauffage de l'élément de soudage et en même temps malaxés en un mélange pâteux de matériaux, lors de l'insertion dans la zone de soudage rétrécie de la zone de chauffage de l'élément de soudage, ce mélange étant transformé en une soudure sans rebords entre les deux tôles par un refroidissement dans la zone de sortie de l'élément de soudage.

11. Procédé selon la revendication 10, **caractérisé en ce que** les tôles en alliage (acier - aluminium), partiellement fondues dans la zone de chauffage de l'élément de soudage, ou encore les profils en matière thermoplastique, sont homogénéisés de force en un mélange pâteux de matériaux, au moyen d'une conception ondulée de la zone de chauffage.

12. Procédé selon les revendications 1 à 9, **caractérisé en ce que** les rebords verticaux des tôles en acier ou en métaux légers (aluminium) sont entièrement fondus dans la zone de soudage de l'élément de soudage et soudés ensemble, sans rebords, par le refroidissement dans la zone de sortie de l'élément de soudage.

13. Dispositif de soudage par pression de deux éléments de construction (9 ; 10) comportant chacun un rebord vertical minimal (24 ; 25), en particulier de deux tôles ou profils, avec un élément de soudage (1) avec un corps (2) comportant un support (6), deux électrodes de soudage (17 ; 18) étant prévues dans l'élément de soudage, entre lesquelles les tôles (24 ; 25) doivent être positionnées pour le soudage, la chaleur nécessaire au soudage devant être produite par un courant électrique conduit par les électrodes de soudage (17 ; 18), par le biais de la résistance électrique d'une zone de soudage (19) des deux tôles (9 ; 10), ou devant être produite par le chauffage de l'élément de soudage (1), et les deux tôles ou profils (9 ; 10) devant être reliés ensemble à la façon d'un soudage, sous l'effet simultané d'une force de pression exercée sur les tôles (9 ; 10) par les électrodes de soudage (17 ; 18) de l'élément de soudage (1),
**caractérisé en ce que**
- l'élément de soudage (1) et les deux tôles à souder (9 ; 10) sont maintenus de façon à pouvoir être déplacés l'un vers l'autre dans le sens de l'axe médian longitudinal (7) de l'élément de soudage (1),
- l'élément de soudage (1) est conçu comme le coulisseau d'une fermeture éclair,
- le corps (2) de l'élément de soudage (1) comporte une zone d'entrée (14) et une zone de sortie (15), ainsi qu'une zone de chauffage (16) disposée entre elles, cette zone de chauffage comprenant la zone de soudage (19), et **en ce qu'**il est traversé par les canaux de refroidissement (27 ; 31) d'un système de refroidissement,
- un guidage (20) destiné aux deux tôles à souder (9 ; 10) se poursuit en continu dans la zone d'entrée (14), dans la zone de chauffage (16) et dans la zone de sortie (15) du corps (2), dans le sens de l'axe médian longitudinal (7) de l'élément de soudage (1),
- un écarteur (21) est prévu sur le corps (2), s'étendant depuis l'extérieur du corps (2) jusqu'à l'intérieur de la zone d'entrée (14), le long de l'axe médian longitudinal (7) de l'élément de soudage (1), ledit écarteur présentant un contour qui se rétrécit en forme de cône en direction de la zone de chauffage (16), et divisant le guidage (20) du côté de la zone d'entrée, en deux canaux d'insertion (22 et 23) se dirigeant l'un vers l'autre selon un angle aigu, destinés aux deux tôles (9 ou 10), de telle manière que celles-ci, orientées selon un angle α1 ou α2 par rapport à l'axe médian longitudinal (7) de l'élément de soudage, sont positionnées l'une contre l'autre dans le guidage (20) seulement dans la zone d'entrée (14), en un point de contact (26) adjacent à la zone de chauffage (16), puis exposées dans le guidage (20) à la force de pression exercée par les électrodes de soudage (17 ; 18) dans la zone de chauffage (16), tout en étant mises dans un état au moins partiellement fondu dans la zone de soudage (19) et soudées ensemble, sans rebords, par refroidissement dans la zone de sortie (15) consécutive, qui constitue une station de refroidissement.

14. Dispositif selon la revendication 13, **caractérisé en ce que** les tôles à souder (9 ; 10) sont maintenues en position fixe par un dispositif de soutien (12) et l'élément de soudage (1) en forme de coulisseau de fermeture éclair est déplacé vers les extrémités des tôles (9 ; 10) situées du côté de la zone d'entrée, par un bras de robot (8), dans le sens de l'axe médian longitudinal (7) de l'élément de soudage (1).

15. Dispositif selon la revendication 13, **caractérisé en ce que** le dispositif de soutien (12) des tôles à souder (9 ; 10) est actionné au moyen de roulettes d'entraînement (11), de telle façon que les tôles (9 ; 10) sont déplacées vers l'élément de soudage (1) dans le sens de l'axe médian longitudinal (7) de celui-ci.

16. Dispositif selon la revendication 15, **caractérisé en ce que** l'élément de soudage (1) est maintenu en position fixe au moyen du support (6).

17. Dispositif selon la revendication 15, **caractérisé en ce que** l'élément de soudage (1) est déplacé dans le sens de son axe médian longitudinal (7), contre les tôles (9 ; 10) entraînées.

18. Dispositif selon les revendications 13 à 17, **caractérisé en ce que** la zone de chauffage (16) est conçue avec une forme ondulée.

19. Dispositif selon les revendications 13 à 18, **caractérisé en ce que** des systèmes de refroidissement séparés (27 ; 31) sont prévus d'une part pour les électrodes de soudage (17 ; 18) et d'autre part pour les zones d'entrée, de chauffage et de sortie (14 ; 16 ; 15) de l'élément de soudage (1).

20. Dispositif selon les revendications 13 à 19, **caractérisé en ce que** les deux angles d'orientation α1 et α2 des surfaces de guidage latérales (29) de l'écarteur (21) par rapport à l'axe médian longitudinal (7) de l'élément de soudage (1) sont identiques, avec une même largeur des rebords verticaux (24 ; 25).

21. Dispositif selon les revendications 13 à 19, **caractérisé en ce que** les deux angles d'orientation α1 et α2 des surfaces de guidage latérales (29) de l'écarteur (21) par rapport à l'axe médian longitudinal (7) de l'élément de soudage (1) sont différents, avec une largeur différente des rebords verticaux (24 ; 25).
